# EUROPEAN PATENT APPLICATION

(11) **EP 4 778 691 A1**
(43) Date of publication of application: **22.07.2026**
(21) Application number: 24865002.0
(22) Date of filing: 27.05.2024
(51) Int. Cl.: B29B 11/16, B32B 5/28, D06M 15/59, B29K 105/08

(54) **COMPOSITE MATERIAL, MOLDED ARTICLE, AND METHOD FOR PRODUCING MOLDED ARTICLE**

(30) Priority: 13.09.2023 JP 2023148329
(71) Applicant: MITSUBISHI GAS CHEMICAL COMPANY, INC., Chiyoda-ku Tokyo 100-8324 (JP)
(72) Inventor: NAKAI, Asami, Gifu-shi, Gifu 501-1193 (JP); MOTOCHIKA, Toshihiro, Kahoku-shi, Ishikawa 929-1215 (JP); IDE, Keisuke, Kahoku-shi, Ishikawa 929-1215 (JP); AYUBA, Shinichi, Hiratsuka-shi, Kanagawa 254-0016 (JP); ITO, Keisuke, Hiratsuka-shi, Kanagawa 254-0016 (JP)
(74) Representative: Vossius & Partner Patentanwälte Rechtsanwälte mbB
(86) International application number: PCT/JP2024/019373
(87) International publication number: WO 2025/057494

(57) **Abstract**

Provided are a composite material having excellent pliability, capable of providing a molded article having excellent mechanical strength even when reinforcing fibers such as recycled reinforcing fibers are used, and a molded article. A composite material includes a continuous thermoplastic resin fiber (1), a continuous reinforcing fiber (2) having a thermosetting resin on its surface, and a thermoplastic resin (3) having a melting point lower than a melting point of a resin constituting the continuous thermoplastic resin fiber (1). The continuous reinforcing fiber (2) contains the thermosetting resin at a proportion of from 2 to 40 mass%, a content of the thermoplastic resin (3) in the composite material is from 5 to 80 parts by mass per 100 parts by mass of a total of the continuous thermoplastic resin fiber (1) and the thermoplastic resin (3), and at least a portion of the continuous thermoplastic resin fibers (1) and at least a portion of the continuous reinforcing fibers (2) are bound to each other through the thermoplastic resin (3).

## Description

### Technical Field

The present invention relates to a composite material, a molded article, and a method for producing a molded article. In particular, the present invention relates to a composite material including a continuous thermoplastic resin fiber and a continuous reinforcing fiber.

### Background Art

In recent years, fiber-reinforced resin composite materials obtained by reinforcing a thermoplastic resin with continuous reinforcing fibers have attracted attention. By using the continuous reinforcing fiber, high mechanical properties can be expected, and by using the thermoplastic resin, advantages such as secondary processability can be obtained. However, the thermoplastic resin composite material reinforced with the continuous reinforcing fiber has an issue that it is difficult to impregnate the continuous reinforcing fiber bundle with the thermoplastic resin because the melt viscosity of the resin is high.

To solve this problem, a mixed fiber yarn which is a fibrous intermediate material obtained by mixing a continuous thermoplastic resin fiber and a continuous reinforcing fiber has attracted attention (Patent Documents 1 and 2).

### Citation List

### Patent Document

Patent Document 1: JP 2015-098669 A
Patent Document 2: JP 2014-173196 A

### Summary of Invention

### Technical Problem

The mixed fiber yarn is a material having excellent pliability. Meanwhile, in recent years, it is also expected to use recycled reinforcing fibers from the viewpoint of effective use of resources. Here, recycled reinforcing fibers are often recovered by burning a molded article of a thermosetting resin reinforced with reinforcing fibers, but the recycled reinforcing fibers are often damaged through this burning. A fiber-reinforced resin material using damaged reinforcing fibers tends to be poor in mechanical strength as a molded article. In addition, it is difficult to produce a composite material excellent in pliability while using reinforcing fibers recovered from a molded article of a thermosetting resin.

An object of the present invention is to solve such issues, and an object of the present invention is to provide a composite material having excellent pliability and capable of providing a molded article having excellent mechanical strength even when reinforcing fibers such as recycled reinforcing fibers are used, and a molded article.

### Solution to Problem

As a result of studies conducted by the inventors of the present invention to solve the above-described issues, it has been found that the above issues can be solved by using a thermoplastic resin (3) having a melting point lower than that of a resin constituting a continuous thermoplastic resin fiber in a predetermined proportion when binding the continuous thermoplastic resin fiber and a continuous reinforcing fiber having a thermosetting resin on the surface thereof.

Specifically, the above-described issues have been solved by the following means.
<1> A composite material, including: a continuous thermoplastic resin fiber (1); a continuous reinforcing fiber (2) including a thermosetting resin on a surface thereof; and a thermoplastic resin (3) having a melting point lower than a melting point of a resin constituting the continuous thermoplastic resin fiber (1), wherein the continuous reinforcing fiber (2) contains the thermosetting resin at a proportion of from 2 to 40 mass%, a content of the thermoplastic resin (3) contained in the composite material is from 5 to 80 parts by mass per 100 parts by mass of a total of the continuous thermoplastic resin fiber (1) and the thermoplastic resin (3), and at least a portion of the continuous thermoplastic resin fibers (1) and at least a portion of the continuous reinforcing fibers (2) are bound to each other through the thermoplastic resin (3).
<2> The composite material according to <1>, wherein the continuous reinforcing fiber (2) contains a recycled continuous reinforcing fiber.
<3> The composite material according to <1> or <2>, wherein the continuous reinforcing fiber (2) contains a recycled continuous carbon fiber.
<4> The composite material according to any one of <1> to <3>, wherein the continuous thermoplastic resin fiber (1) and the thermoplastic resin (3) each independently contain a polyamide resin.
<5> The composite material according to any one of <1> to <4>, wherein the resin constituting the continuous thermoplastic resin fiber (1) contains a xylylenediamine-based polyamide resin containing a diamine structural unit and a dicarboxylic acid structural unit, in which 70 mol% or more of the diamine structural unit is derived from a xylylenediamine.
<6> The composite material according to any one of <1> to <5>, wherein the thermoplastic resin (3) contains a xylylenediamine-based polyamide resin containing a diamine structural unit and a dicarboxylic acid structural unit, in which 70 mol% or more of the diamine structural unit is derived from a xylylenediamine.
<7> The composite material according to <5> or <6>, wherein 50 mol% or more of the dicarboxylic acid structural unit in the xylylenediamine-based polyamide resin includes a structural unit derived from an α,ω-linear aliphatic dicarboxylic acid having from 4 to 20 carbon atoms.
<8> The composite material according to any one of <1> to <7>,
   including: a continuous thermoplastic resin fiber layer in which the continuous thermoplastic resin fiber (1) is unidirectionally aligned in parallel, and
   a continuous reinforcing fiber layer in which the continuous reinforcing fiber (2) is unidirectionally aligned in parallel,
   wherein the thermoplastic resin (3) binds the continuous thermoplastic resin fiber layer and the continuous reinforcing fiber layer to each other.
<9> The composite material according to <8>, wherein the continuous thermoplastic resin fiber (1) and the continuous reinforcing fiber (2) are aligned in parallel in a same direction.
<10> The composite material according to any one of <1> to <9>, wherein the continuous reinforcing fiber (2) is contained in an amount of from 40 to 90 parts by mass per 100 parts by mass of a total of the continuous thermoplastic resin fiber (1) and the continuous reinforcing fiber (2).
<11> The composite material according to any one of <1> to <10>, which has a tape-like shape.
<12> The composite material according to any one of <1> to <11>, which is for tailored fiber placement processing.
<13> The composite material according to any one of <1> to <12>, wherein
   the continuous reinforcing fiber (2) includes a recycled carbon fiber,
   the continuous thermoplastic resin fiber (1) and the thermoplastic resin (3) each independently contain a xylylenediamine-based polyamide resin containing a diamine structural unit and a dicarboxylic acid structural unit, in which 70 mol% or more of the diamine structural unit is derived from a xylylenediamine,
   50 mol% or more of the dicarboxylic acid structural unit in the xylylenediamine-based polyamide resin is derived from an α,ω-linear aliphatic dicarboxylic acid structural unit having from 4 to 20 carbon atoms,
   the composite material includes:
      a continuous thermoplastic resin fiber layer in which the continuous thermoplastic resin fiber (1) is unidirectionally aligned in parallel, and
      a continuous reinforcing fiber layer in which the continuous reinforcing fiber (2) is unidirectionally aligned in parallel,
      the thermoplastic resin (3) binds the continuous thermoplastic resin fiber layer and the continuous reinforcing fiber layer to each other,
      the continuous thermoplastic resin fiber (1) and the continuous reinforcing fiber (2) are each aligned in parallel in a same direction,
      the continuous reinforcing fiber (2) is contained in an amount of from 40 to 90 parts by mass per 100 parts by mass of a total of the continuous thermoplastic resin fiber (1) and the continuous reinforcing fiber (2),
      the composite material has a tape-like shape, and
      the composite material is for tailored fiber placement processing.
<14> A molded article, including the composite material described in any one of <1> to <13>.
<15> A method for producing a molded article, the method including performing tailored fiber placement processing by stitching the composite material described in any one of <1> to <13> onto a base material.

### Advantageous Effects of Invention

According to the present invention, it is possible to provide a composite material having excellent pliability, capable of providing a molded article having excellent mechanical strength even when reinforcing fibers such as recycled reinforcing fibers are used, and a molded article.

### Brief Description of Drawings

FIG. 1 is a schematic sectional view illustrating an example of a composite material of the present embodiment.
FIG. 2 is a schematic sectional view illustrating another example of the composite material of the present embodiment.
FIG. 3 is a schematic view illustrating an example of a case where the composite material of the present embodiment is subjected to TFP processing.
FIG. 4 includes photographs of a stitch made through TFP processing in Examples.

### Description of Embodiments

Hereinafter, embodiments for carrying out the present invention (hereinafter, simply referred to as "the present embodiment") will be described in detail. The present embodiments described below are examples for describing the present invention, and the present invention is not limited only to the present embodiments.

In the present specification, "from ... to ..." or "of ... to ..." is used to mean that the numerical values described before and after "to" are included as the lower limit value and the upper limit value, respectively.

In the present description, various physical property values and characteristic values are those at 23°C unless otherwise noted.

In the present specification, weight average molecular weight and number average molecular weight are values calibrated with polystyrene measured by gel permeation chromatography (GPC) unless otherwise noted.

In the present specification, unless otherwise noted, the weight average molecular weight and the number average molecular weight can be measured according to the description in paragraph [0047] of JP 2018-165298 A, the contents of which are incorporated herein by reference.

When the measurement methods or the like described in the standards set forth in the present description differ depending on the year, the measurement methods or the like are based on the standards as of January 1, 2023, unless otherwise noted.

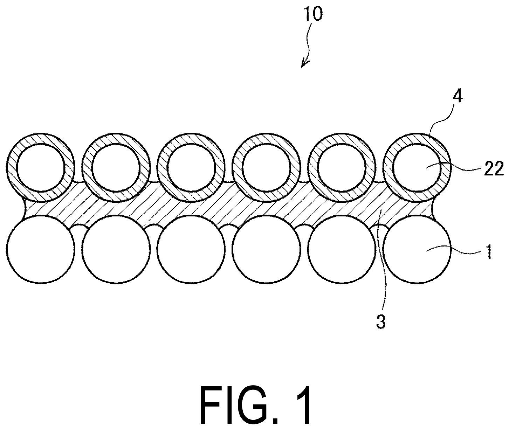

In FIGS. 1 to 3, a scale or the like is not always consistent with the actual scale or the like.

A composite material according to the present embodiment includes a continuous thermoplastic resin fiber(1); a continuous reinforcing fiber (2) including a thermosetting resin on its surface; and a thermoplastic resin (3) having a melting point lower than a melting point of a resin constituting the continuous thermoplastic resin fiber (1), wherein the continuous reinforcing fiber (2) contains the thermosetting resin at a proportion of from 2 to 40 mass%, a content of the thermoplastic resin (3) contained in the composite material is from 5 to 80 parts by mass per 100 parts by mass of a total of the continuous thermoplastic resin fiber (1) and the thermoplastic resin (3), and at least a portion of the continuous thermoplastic resin fibers (1) and at least a portion of the continuous reinforcing fibers (2) are bound to each other through the thermoplastic resin (3).

Such a constitution makes it possible to obtain a composite material excellent in pliability, the composite material being capable of providing a molded article excellent in mechanical strength.

As a method for binding a thermoplastic resin and reinforcing fibers, it is known to perform hot pressing to form a prepreg. However, when a molded article having many irregularities is molded, a pliable composite material may be required as compared with a prepreg.

In the present embodiment, a composite material containing a continuous thermoplastic resin fiber (1) in which a thermoplastic resin maintains a fibrous shape is used.

Specifically, a composite material excellent in pliability has been successfully produced by binding a continuous thermoplastic resin fiber (1) and a continuous reinforcing fiber (2), which has a thermosetting resin on its surface, to each other through a thermoplastic resin (3) (herein may be referred to as "binder resin") having a melting point lower than a melting point of a resin constituting the continuous thermoplastic resin fiber (1).

By using a thermoplastic resin having a low melting point as the binder resin, the thermoplastic resin is sufficiently dissolved during heat molding and does not remain as a foreign matter in the molded article.

Further, recycled reinforcing fibers can be used as a raw material of the composite material of the present embodiment, and thus, it is possible to cope with environmental load.

In the composite material of the present embodiment, the continuous thermoplastic resin fiber (1) is preferably arranged with regularity. In the composite material of the present embodiment, the continuous reinforcing fibers (2) are preferably arranged with regularity. The phrase "arranged with regularity" includes that fibers are unidirectionally aligned in parallel (open fiber material of continuous reinforcing fiber roving), a woven fabric of fibers, and a knitted fabric of fibers. Note that the regularity in the present invention includes a normal error in the technical field of the present invention in addition to the regularity in a geometric sense. Examples of an arrangement without regularity include nonwoven fabrics.

FIG. 1 is a schematic view illustrating an example of a composite material of the present embodiment. FIG. 1 is a sectional view in a direction perpendicular to a longitudinal direction of the continuous reinforcing fiber (2). A composite material 10 illustrated in FIG. 1 has a tape-like shape. The tape-like shape facilitates further processing. Here, in FIG. 1, 1 denotes the continuous thermoplastic resin fiber (1), 22 denotes the continuous reinforcing fiber part itself in the continuous reinforcing fiber (2), 3 denotes the thermoplastic resin (3) (binder resin) having a melting point lower than that of the resin constituting the continuous thermoplastic resin fiber (1), and 4 denotes a thermosetting resin present on a surface of the continuous reinforcing fiber 22 in the continuous reinforcing fiber (2). That is, the continuous reinforcing fiber (2) in the present specification means a continuous reinforcing fiber containing the continuous reinforcing fiber 22 itself and the thermosetting resin 4.

Returning to FIG. 1, the composite material 10 includes the continuous thermoplastic resin fiber (1), the continuous reinforcing fiber (2) having a thermosetting resin 4 on a surface of the thermosetting resin, and the thermoplastic resin (3) having a melting point lower than that of the resin constituting the continuous thermoplastic resin fiber (1).

By using the material in which the surface of the continuous reinforcing fiber 22 itself is covered with a relatively large amount of the thermosetting resin 4, damage to the reinforcing fibers can be minimized even though recycled reinforcing fibers are used. The thermosetting resin 4 may cover a part or all of the surface of the continuous reinforcing fiber 22. Preferably, the thermosetting resin 4 covers 50% or more, more preferably 80% or more of the surface area of the continuous reinforcing fiber 22 itself. The thermosetting resin 4 may cover 100% of the surface area of the continuous reinforcing fiber 22 itself. In addition to a curable resin, the thermosetting resin 4 may contain a resin additive, a filler, a surface treating agent for reinforcing fibers, and the like. Details thereof will be described later.

In the present embodiment, at least a portion of the continuous thermoplastic resin fibers (1) and at least a portion of the continuous reinforcing fibers (2) are bound to each other through the thermoplastic resin (3) (binder resin). In FIG. 1, almost all the continuous reinforcing fibers (2) and almost all the continuous thermoplastic resin fibers (1) are bound to each other with the binder resin 3 interposed therebetween. In the composite material of the present embodiment, the continuous reinforcing fiber (2) and the continuous thermoplastic resin fiber (1) are bound using the binder resin 3. Thus, the continuous thermoplastic resin fiber (1) can be held in a fibrous state, and pliability can be achieved for the resulting composite material.

In the present embodiment, the binder resin 3 covers preferably 20% or more, more preferably 40% or more of the surface area of the continuous thermoplastic resin fiber (1). The binder resin 3 may cover 100% of the surface area of the continuous thermoplastic resin fiber 1, but the required performance is satisfied sufficiently when the binder resin covers 15% or less of the surface area.

The shape of the composite material 10 of the present embodiment is not particularly limited, but is preferably a tape-like shape.

When the composite material of the present embodiment is in a tape-like shape, the thickness thereof is preferably 100 µm or more, more preferably 20 µm or more. When the thickness is equal to or more than the lower limit value, the production time of the preform (molding before heat processing) tends to be shortened. The thickness of the composite material having a tape-like shape is preferably 500 µm or less, more preferably 400 µm or less. When the thickness is equal to or less than the upper limit value, the inside of the reinforcing fiber is impregnated with the resin, the molding time can be shortened, and the mechanical properties of the resulting molded article tend to improve.

When the composite material of the present embodiment is in a tape-like shape, the width thereof is preferably 5 mm or more, more preferably 8 mm or more. When the width is equal to or more than the lower limit value, the time for producing a preform using TFP or a braid tends to be shortened. The width of the composite material having a tape-like shape is preferably 25 mm or less, more preferably 20 mm or less. When the width is equal to or less than the upper limit value, the designability of the resulting molded article tends to improve.

Preferably, the composite material of the present embodiment includes a continuous thermoplastic resin fiber layer in which the continuous thermoplastic resin fiber (1) is unidirectionally aligned in parallel and a continuous reinforcing fiber layer in which the continuous reinforcing fiber (2) is unidirectionally aligned in parallel, and the thermoplastic resin (3) binds the continuous thermoplastic resin fiber layer and the continuous reinforcing fiber layer to each other.

The continuous thermoplastic resin fiber layer in which the continuous thermoplastic resin fiber (1) is unidirectionally aligned in parallel includes, for example, a continuous thermoplastic resin fiber layer in which the continuous thermoplastic resin fiber layers are arranged in a row to form a layered structure as illustrated in FIG. 1. Such a layered shape can be formed by, for example, opening a multifilament continuous thermoplastic resin fiber composed of a plurality of continuous thermoplastic resin fibers.

Examples of the continuous reinforcing fiber layer in which the continuous reinforcing fibers (2) are unidirectionally aligned in parallel include continuous reinforcing fiber layers in which the continuous reinforcing fiber layers are arranged in a row to form a layered structure as illustrated in FIG. 1. Such a layered structure can be formed, for example, by opening a continuous reinforcing fiber bundle including a plurality of continuous reinforcing fibers. Recycled reinforcing fibers recovered from a UD tape (uni-directional tape) can also be used.

In the composite material of the present embodiment, the continuous thermoplastic resin fiber (1) and the continuous reinforcing fiber (2) are preferably aligned in parallel in the same direction.

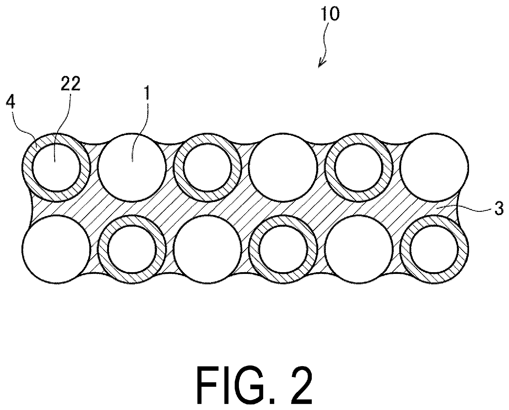

FIG. 2 illustrates another example of the composite material of the present embodiment, in which the continuous thermoplastic resin fiber (1) and the continuous reinforcing fiber (2) are unidirectionally aligned in parallel, but the continuous thermoplastic resin fiber (1) and the continuous reinforcing fiber (2) are dispersed and mixed. The reference numerals are the same as those in FIG. 1.

In addition to the above, in the composite material of the present embodiment, it is also preferable that a woven fabric of the continuous thermoplastic resin fiber (1) and a woven fabric of the continuous reinforcing fiber (2) are bound to each other through the binder resin 3.

The composite material of the present embodiment may be used as it is, but is usually, preferably used for further processing (secondary processing).

The composite material of the present embodiment may be directly subjected to heat processing, but is preferably used as a yarn for processing a tailored fiber placement (TFP) because of its pliability, and as a yarn used for applications including filature, such as a braiding machine, a knitting machine, and a weaving machine. Examples of the application including filature include a braid and a twisted string.

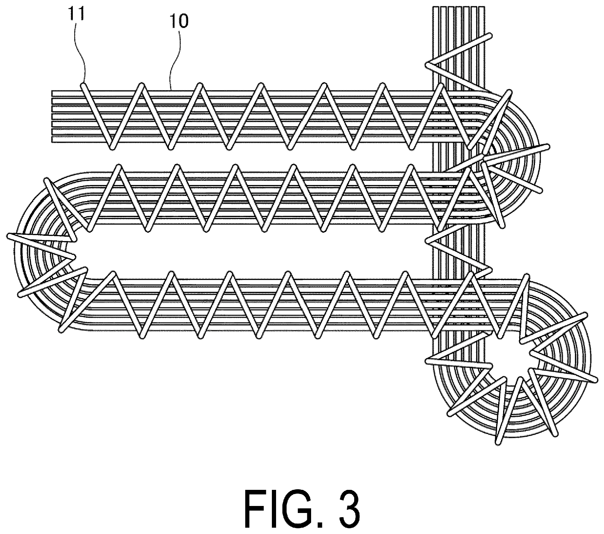

FIG. 3 illustrates an example of a case where the composite material of the present embodiment is subjected to TFP processing, in which reference numeral 10 denotes the composite material of the present embodiment, and reference numeral 11 denotes a yarn. In the TFP processing, the composite material 10 is preferably disposed so as to conform to the shape of the molded article and stitched with the yarn 11. The yarn 11 is usually a continuous thermoplastic resin fiber. One preferred form of the thermoplastic resin fiber is a thermoplastic resin fiber corresponding to the continuous thermoplastic resin fiber (1), and another preferred form is a thermoplastic resin fiber formed from a resin constituting the binder resin 3. As illustrated in FIG. 3, the composite material of the present embodiment can be preferably used for a molded article having, for example, two or more folded portions, preferably three or more folded portions. In particular, as illustrated in FIG. 3, the composite material is preferably used for a molded article having a folded portion having a folding angle of 90°C or more.

### Continuous Thermoplastic Resin Fiber (1)

Next, the continuous thermoplastic resin fiber (1) will be described.

The continuous thermoplastic resin fiber (1) for use in the present embodiment refers to a thermoplastic resin fiber having a fiber length of more than 6 mm, and is preferably a thermoplastic resin fiber of more than 12 mm, more preferably a thermoplastic resin fiber of more than 30 mm, still more preferably a thermoplastic resin fiber of more than 10 cm. The average fiber length of the continuous thermoplastic resin fibers (1) for use in the present embodiment is not particularly limited, but is preferably 1 m or more, more preferably 100 m or more, still more preferably 1000 m or more, and is preferably 20000 m or less, more preferably 10000 m or less, still more preferably 7000 m or less from the viewpoint of improving molding processability.

In the composite material of the present embodiment, the total fineness of the continuous thermoplastic resin fibers (1) is preferably from 200 to 12000 dtex, more preferably from 1000 to 10000 dtex. The effect of the present embodiment is more effectively exhibited by setting the total fineness to such a range.

The total fiber number of the continuous thermoplastic resin fibers (1) in the composite material of the present embodiment is preferably from 10 to 10000 f, more preferably from 100 to 5000 f, still more preferably from 500 to 3000 f. A composite material excellent in physical properties and texture as a composite material is obtained by setting the total fiber number to such a range.

The continuous thermoplastic resin fiber (1) for use in the present embodiment contains a thermoplastic resin as a main component (the thermoplastic resin accounts for generally 90 mass% or more, preferably 95 mass% or more, and 100 mass% or less in 100 mass%). The continuous thermoplastic resin fiber (1) may also appropriately contain known additives and the like.

As the thermoplastic resin used for the continuous thermoplastic resin fiber (1), a known thermoplastic resin can be widely used, and is usually a crystalline resin.

As the thermoplastic resin used for the continuous thermoplastic resin fiber (1), specifically, polyolefin resins such as polyethylene and polypropylene, polyamide resins, polyester resins such as polyethylene terephthalate and polybutylene terephthalate, polyoxymethylene resins, polyetherketone resins such as polyether ketones, polyether ether ketones, polyether ketone ketones, and polyether ether ketone ketones, polyether sulfone resins, polyether sulfide resins, thermoplastic polyimide resins such as thermoplastic polyether imides, thermoplastic polyamide imides, wholly aromatic polyimides and semiaromatic polyimides, and the like can be used, and a polyamide resin is more preferable.

The polyamide resin for use in the present embodiment may be an aliphatic polyamide resin or an aromatic polyamide resin.

The aliphatic polyamide resin means a polyamide resin in which a structural unit derived from an aromatic monomer accounts for less than 20 mol% of all structural units among the total structural units of the structural units constituting the polyamide resin. Examples of the aliphatic polyamide resin include polyamide 4, polyamide 46, polyamide 6, polyamide 66, polyamide 666, polyamide 610, polyamide 11, polyamide 116, polyamide 12, and polyamide 612.

The aromatic polyamide resin means that it contains a diamine structural unit and a dicarboxylic acid structural unit, and from 20 to 80 mol% (preferably from 30 to 80 mol%, more preferably from 40 to 70 mol%) of the total structural units of the diamine structural unit and the dicarboxylic acid structural unit is a structural unit containing an aromatic ring. The use of such a semi-aromatic polyamide resin can increase mechanical strength of the resulting molded article. Examples of the semi-aromatic polyamide resin include polyamide 6T/6I, polyamide 66/6T, polyamide 9T, polyamide 10T, and xylylenediamine-based polyamide resins described later. Xylylenediamine-based polyamide resins are preferable.

The xylylenediamine-based polyamide resin in the present embodiment is a polyamide resin containing a xylylenediamine-based polyamide resin containing a diamine structural unit and a dicarboxylic acid structural unit, in which 70 mol% or more of the diamine structural unit is derived from a xylylenediamine.

Preferably, in the xylylenediamine-based polyamide resin, 50 mol% or more of the dicarboxylic acid structural unit is derived from an α,ω-linear aliphatic dicarboxylic acid having from 4 to 20 carbon atoms. In the composite material of the present embodiment, the strength and chemical resistance inherent in the xylylenediamine-based polyamide resin can be exhibited.

In the xylylenediamine-based polyamide resin, preferably 75 mol% or more, more preferably 80 mol% or more, still more preferably 85 mol% or more, further preferably 90 mol% or more, still further preferably 95 mol% or more, particularly still more preferably 99 mol% or more, of the diamine structural unit is derived from a xylylenediamine (preferably para-xylylenediamine and/or meta-xylylenediamine, more preferably meta-xylylenediamine). In the xylylenediamine-based polyamide resin, more preferably 60 mol% or more, still more preferably 70 mol% or more, further preferably 80 mol% or more, still further preferably 90 mol% or more, still further preferably 95 mol% or more, particularly still more preferably 99 mol% or more, of the dicarboxylic acid structural unit is derived from an α,ω-linear aliphatic dicarboxylic acid having from 4 to 20 carbon atoms.

In the present embodiment, as to the mole ratio between meta-xylylenediamine and para-xylylenediamine in xylylenediamine when a total of meta-xylylenediamine and para-xylylenediamine is taken as 100 mol, meta-xylylenediamine/para-xylylenediamine is preferably from 00 to 100/100 to 0, preferably from 10 to 100/90 to 0, more preferably from 20 to 100/80 to 0, still more preferably from 50 to 90/50 to 10, further preferably from 60 to 80/40 to 20. By containing para-xylylenediamine, the melting point of the polyamide resin can be increased.

Examples of the diamine that can be used as a raw material diamine component of the xylylenediamine-based polyamide resin, other than meta-xylylenediamine or para-xylylenediamine, include an aliphatic diamine, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, or 2,4,4-trimethylhexamethylenediamine; an alicyclic diamine, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl) propane, bis(aminomethyl)decalin, or bis(aminomethyl)tricyclodecane; and a diamine having an aromatic ring, such as bis(4-aminophenyl)ether, p-phenylenediamine, or bis(aminomethyl)naphthalene. One of these diamines, or a mixture of two or more of these may be used.

As described above, in the xylylenediamine-based polyamide resin, 50 mol% or more of the dicarboxylic acid structural unit is preferably derived from an α,ω-linear aliphatic dicarboxylic acid having from 4 to 20 carbon atoms. The number of carbon atoms of the α,ω-linear aliphatic dicarboxylic acid having from 4 to 20 carbon atoms is preferably 6 or more, and preferably 18 or less, more preferably 16 or less, still more preferably 14 or less, further preferably 13 or less, and still further preferably 12 or less.

Examples of the α,ω-linear aliphatic dicarboxylic acid having from 4 to 20 carbon atoms that is preferably used as the raw material dicarboxylic acid component of the xylylenediamine-based polyamide resin include an aliphatic dicarboxylic acid, such as succinic acid, glutaric acid, pimelic acid, suberic acid, azelaic acid, adipic acid, sebacic acid, undecanedioic acid, or dodecanedioic acid. One or a mixture of two or more of these may be used. Among these, one or more selected from adipic acid, sebacic acid, and dodecanedioic acid is more preferable, and sebacic acid is still more preferable.

Examples of a preferred embodiment of the xylylenediamine-based polyamide resin in the present embodiment include a xylylenediamine-based polyamide resin in which 50 mol% or more (preferably 70 mol% or more, more preferably 90 mol% or more) of the dicarboxylic acid structural units is derived from one or more of adipic acid, sebacic acid, and dodecanedioic acid (preferably sebacic acid).

Examples of the dicarboxylic acid component other than the α,ω-linear aliphatic dicarboxylic acid having from 4 to 20 carbon atoms described above include a phthalic acid compound, such as isophthalic acid, terephthalic acid, or orthophthalic acid; and an isomer of naphthalenedicarboxylic acid, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, or 2,7-naphthalenedicarboxylic acid. One of these dicarboxylic acid components, or a mixture of two or more of these may be used.

The xylylenediamine-based polyamide resin contains a diamine structural unit and a dicarboxylic acid structural unit as main components, but it does not entirely exclude structural units other than these. The xylylenediamine-based polyamide resin may contain a structural unit derived from lactams such as ε-caprolactam or laurolactam, or derived from an aliphatic aminocarboxylic acid such as aminocaproic acid or aminoundecanoic acid. Here, the main component means, of the structural units constituting the xylylenediamine-based polyamide resin, a component having the largest total number of the diamine structural units and the dicarboxylic acid structural units among all the structural units. In the present embodiment, the total of the diamine structural units and the dicarboxylic acid structural units in the xylylenediamine-based polyamide resin preferably accounts for 90 mass% or more, more preferably 95 mass% or more, still more preferably 97 mass% or more, further preferably 99 mass% or more, of all the structural units.

It is also preferable to use a recycled resin or a thermoplastic resin produced using a biomass raw material (biomass thermoplastic resin) as the thermoplastic resin (in particular, the polyamide resin, and further, the xylylenediamine-based polyamide resin). Use of a biomass thermoplastic resin can reduce environmental load.

For example, in the xylylenediamine-based polyamide resin, a bioadipic acid can be used as a biomass raw material. Adipic acid that has been mass balance certified (ISCC PLUS) can also be used. The mass balance certification means that degrees of usage of reusable raw materials and raw biomaterials for each factory or production facility and degrees of production and shipment of products are quantified and certified together with quality.

The melting point of the thermoplastic resin (preferably xylylenediamine-based polyamide resin) contained in the continuous thermoplastic resin fiber (1) is preferably 150°C or more, more preferably 180°C or more, still more preferably 200°C or more, further preferably 205°C or more. The melting point of the thermoplastic resin (preferably xylylenediamine-based polyamide resin) is preferably 350°C or less, more preferably 330°C or less, still more preferably 300°C or less, further preferably 280°C or less, still further preferably 260°C or less, and still further preferably 250°C or less. When the continuous thermoplastic resin fiber (1) of the present embodiment contains two or more thermoplastic resins, the melting point of the thermoplastic resin constituting the continuous thermoplastic resin fiber (1) is the melting point of the resin having the highest melting point.

The melting point is measured in accordance with descriptions in the Examples described below.

The lower limit of the number average molecular weight (Mn) of the thermoplastic resin (preferably xylylenediamine-based polyamide resin) is preferably 6000 or more, more preferably 8000 or more, still more preferably 10000 or more, and is preferably 10000 or less, more preferably 50000 or less. When the continuous thermoplastic resin fiber (1) for use in the present embodiment contains two or more thermoplastic resins, the number average molecular weight of the mixture is taken as the number average molecular weight.

The number average molecular weight (Mn) of the thermoplastic resin is determined by gel permeation chromatography (GPC) measurement calibrated with polymethyl methacrylate (PMMA) standard. Two columns, in which a styrene-based polymer is charged as a filler, are used as columns. Hexafluoroisopropanol (HFIP) having a sodium trifluoroacetate concentration of 2 mmol/L is used as a solvent. The measurement is performed at a resin concentration of 0.02 mass%, a column temperature of 40°C, a flow rate of 0.3 mL/min, using a refractive index detector (RI). The calibration curve is measured by dissolving 6 levels of PMMA in HFIP.

To the continuous thermoplastic resin fiber (1) for use in the present embodiment, additives such as antioxidants, stabilizers such as thermal stabilizers, hydrolysis-resistant improving agents, weather resistant stabilizers, matting agents, UV absorbers, nucleating agents, plasticizers, dispersants, flame retardants, antistatic agents, anti-coloration agents, anti-gelling agents, colorants, release agents, and the like can be added within the range that does not impair the object and effect of the present invention. For details of these, reference can be made to the descriptions in paragraphs 0130 to 0155 of JP 4894982 B and the descriptions in paragraphs 0047 to 0103 of WO 2021/241471, the contents of which are incorporated herein by reference.

The proportion of the continuous thermoplastic resin fiber (1) in the composite material of the present embodiment is preferably 10 mass% or more, more preferably 15 mass% or more, still more preferably 20 mass% or more, further preferably 25 mass% or more, still further preferably 30 mass% or more in 100 mass% of the composite material. When the proportion is equal to or more than the lower limit value, the impregnation time, that is, the molding time tends to be further shortened. The proportion of the continuous thermoplastic resin fiber (1) in the composite material of the present embodiment is preferably 75 mass% or less, more preferably 70 mass% or less, still more preferably 65 mass% or less, further preferably 60 mass% or less, still further preferably 55 mass% or less in 100 mass% of the composite material. When the proportion is equal to or less than the upper limit value, the carbon ratio in the composite material tends to increase, and the mechanical properties of the resulting molded article tend to further improve.

The composite material of the present embodiment may contain only one or two or more continuous thermoplastic resin fibers (1). When two or more continuous thermoplastic resin fibers are contained, the total amount is preferably in the range described above.

### Continuous Reinforcing Fiber (2) Having Thermosetting Resin on Surface

In the composite material of the present embodiment, the continuous reinforcing fiber (2) having a thermosetting resin on a surface thereof includes the continuous reinforcing fiber itself and the thermosetting resin as described above, and usually, the total of the continuous reinforcing fiber itself and the thermosetting resin accounts for 95 mass% (preferably 99 mass% or more and 100 mass% or less) of the total of the continuous reinforcing fiber (2).

The continuous reinforcing fiber itself in the present embodiment refers to a reinforcing fiber having a fiber length of more than 6 mm, and is preferably a reinforcing fiber of more than 12 mm, more preferably a reinforcing fiber of more than 30 mm, still more preferably a reinforcing fiber of more than 10 cm. The average fiber length of the continuous reinforcing fibers for use in the present embodiment is not particularly limited, but is preferably 1 m or more, more preferably 100 m or more, still more preferably 1000 m or more, and is preferably 20000 m or less, more preferably 10000 m or less, still more preferably 7000 m or less, from the viewpoint of improving molding processability.

Examples of materials of the continuous reinforcing fiber itself include inorganic fibers, such as glass fibers, carbon fibers, metal fibers, boron fibers, basalt fibers, and ceramic fibers; and organic fibers, such as aramid fibers, polyoxymethylene fibers, aromatic polyamide fibers, polyparaphenylene benzobisoxazole fibers, and ultra-high molecular weight polyethylene fibers. Among these, inorganic fibers are preferable from the viewpoint of achieving high strength, and at least one type selected from the group consisting of glass fibers, carbon fibers, and basalt fibers is more preferable because they are lightweight and have high strength and a high elastic modulus, and carbon fibers are still more preferable.

Examples of the carbon fibers include polyacrylonitrile-based carbon fibers and pitch-based carbon fibers. In addition, carbon fibers made from plant-based raw materials such as lignin and cellulose can also be used.

The continuous reinforcing fiber (2) for use in the present embodiment has a thermosetting resin on a surface thereof. Examples of the thermosetting resin include an epoxy resin, an oxetane resin, a phenol resin, a polyurethane resin, a melamine resin, a maleimide resin, and a cyanate resin. An epoxy resin is preferable.

In the present embodiment, the continuous reinforcing fiber (2) having a thermosetting resin on a surface thereof is preferably a recycled continuous reinforcing fiber, more preferably a recycled continuous carbon fiber. In particular, recycled reinforcing fibers having a high residual ratio of the thermosetting resin are preferable.

In particular, the proportion of the thermosetting resin in the continuous reinforcing fibers (2) is 2 mass% or more, preferably 8 mass% or more, more preferably 10 mass% or more, and it may be 12 mass% or more in 100 mass% of the continuous reinforcing fibers (2). The proportion of the thermosetting resin in the continuous reinforcing fibers (2) is 40 mass% or less, preferably 38 mass% or less, more preferably 35 mass% or less, and it may be 32 mass% or less in 100 mass% of the continuous reinforcing fibers (2). When the proportion is equal to or more than the lower limit value, the damage of the continuous reinforcing fiber in the resulting molded article can be further reduced, and the mechanical strength of the resulting molded article can be further improved. In addition, when the proportion is equal to or less than the upper limit value, the resulting composite material can be made more pliable.

In the continuous reinforcing fibers (2), only one thermosetting resin may be used, or two or more thermosetting resins may be used. When two or more thermosetting resins are used, the total amount is preferably within the range described above.

Some of the thermosetting resin in the continuous reinforcing fibers (2) may be carbonized. In particular, when the continuous reinforcing fiber (2) is a recycled product, the proportion of carbonized product tends to be high. The content of the thermosetting resin in the reinforcing fiber for use in the present embodiment means the amount of the thermosetting resin that is not carbonized after carbonization but remains in the reinforcing fiber.

The continuous reinforcing fiber (2) for use in the present embodiment may be further treated with a treating agent. The degree of integration of the resulting composite material tends to further improve through the treatment with a treating agent. In an embodiment, it is preferable that at least a portion of the treating agent includes the treating agent on the surface of the thermosetting resin of the continuous reinforcing fiber (2) having the thermosetting resin on a surface thereof. Further, in an embodiment, it is preferable that at least a portion of the treating agent includes the treating agent on the surface of the thermosetting resin of the continuous thermoplastic resin fiber (1) and the continuous reinforcing fiber (2) having the thermosetting resin on a surface thereof.

The treating agent is a surface treating agent and/or a binder.

Specifically, the treating agent that can be used in the present embodiment is preferably at least one of an epoxy resin, a urethane resin, a silane coupling agent, a water-insoluble nylon, and a water-soluble nylon, more preferably at least one of an epoxy resin, a urethane resin, a water-insoluble nylon, and a water-soluble nylon, still more preferably a water-soluble nylon.

Here, the water-insoluble nylon means that, when 1 g of nylon is added to 100 g of water at 25°C, 99 mass% or more of the nylon is not dissolved.

When the water-insoluble nylon is used, it is preferable to disperse or suspend powdery water-insoluble nylon in water or an organic solvent. A mixed fiber bundle can be immersed in such a dispersion or suspension of powdery water-insoluble nylon, and dried to form a mixed fiber yarn.

Examples of the water-insoluble nylon include those obtained by emulsifying and dispersing powder of nylon 6, nylon 66, nylon 610, nylon 11, nylon 12, xylylenediamine-based polyamide resin (preferably, polyxylylene adipamide, polyxylylene sebacamide) and a copolymer thereof to which a surfactant which is a nonionic surfactant, a cationic surfactant, an anionic surfactant, or a mixture thereof is added. Commercially available products of water-insoluble nylon are sold as, for example, water-insoluble nylon emulsions, and examples thereof include Sepoljon PA available from Sumitomo Seika Chemicals Company, Limited and Michem Emulsion available from Michaelman.

Here, the water-soluble nylon means that when 1 g of nylon is added to 100 g of water at 25°C, 99 mass% or more of the nylon dissolves in water.

Examples of the water-soluble nylon include modified polyamides such as acrylic acid-grafted N-methoxy-methylated nylon and N-methoxy-methylated nylon having an amide group. Examples of the water-soluble nylon include commercially available products such as AQ-nylon available from Toray Industries, Inc., and Toresin available from Nagase ChemteX Corporation.

The amount of the treating agent is preferably from 0.001 to 5 mass%, more preferably from 0.1 to 4 mass%, still more preferably from 0.5 to 4 mass% per 100 mass% of the amount of the continuous reinforcing fiber itself contained in the continuous reinforcing fiber (2).

The content of the continuous reinforcing fiber (2) in the composite material of the present embodiment is more preferably 40 parts by mass or more, still more preferably 45 parts by mass or more, further preferably 50 parts by mass or more, still further preferably 55 parts by mass or more, and it may be 60 parts by mass or more, per 100 parts by mass of the total of the continuous thermoplastic resin fiber (1) and the continuous reinforcing fiber (2). When the content is equal to or more than the lower limit value, the thermoplastic resin fibers can be disposed around the entire reinforcing fibers, and the impregnation time, that is, the molding time tends to be further shortened. The content of the continuous reinforcing fiber (2) in the composite material of the present embodiment is preferably 90 parts by mass or less, more preferably 85 parts by mass or less, per 100 parts by mass of the total of the continuous thermoplastic resin fiber (1) and the continuous reinforcing fiber (2). When the proportion is equal to or less than the upper limit value, the carbon ratio in the composite material tends to increase, and the mechanical properties of the resulting molded article tend to further improve.

The composite material of the present embodiment may contain only one, or two or more continuous reinforcing fibers (2). When two or more continuous thermoplastic resin fibers are contained, the total amount is preferably in the range described above.

### Thermoplastic Resin (3) Having Melting Point Lower than Melting Point of Resin Constituting Continuous Thermoplastic Resin Fiber (1)

The composite material of the present embodiment contains a thermoplastic resin (3) (binder resin) having a melting point lower than that of the resin constituting the continuous thermoplastic resin fiber (1). By using such a binder resin, the thermoplastic resin fibers (1) and the continuous reinforcing fibers (2) can be effectively bound. The binder resin contains, as a main component (usually 90 mass% or more, preferably 95 mass% or more, and 100 mass% or less in 100 mass% of the binder resin), a thermoplastic resin having a melting point lower than that of the resin constituting the continuous thermoplastic resin fiber (1), and may further contain a known additive or the like.

As the thermoplastic resin, a known thermoplastic resin can be widely used, and a crystalline resin is preferable.

The difference between the melting point of the resin constituting the continuous thermoplastic resin fiber (1) and the melting point of the binder resin is preferably 1°C or more, more preferably 5°C or more, still more preferably 10°C or more, further preferably 15°C or more, still further preferably 20°C or more, still further preferably 30°C or more. When the content is equal to or more than the lower limit value, the thermoplastic resin fibers (1) can more appropriately maintain a fibrous shape, flexibility remains in the composite material, and a design can be clearly reflected when a preform is produced. The difference between the melting point of the resin constituting the continuous thermoplastic resin fiber (1) and the melting point of the binder resin is preferably 100°C or less, more preferably 70°C or less, still more preferably 60°C or less, further preferably 50°C or less, still further preferably 49°C or less. When the difference is equal to or less than the upper limit value, thermal deterioration of the thermoplastic resin fibers (1) can be effectively suppressed.

When the composite material of the present embodiment contains two or more binder resins, the melting point of the binder resin having a higher melting point is set to the melting point.

The melting point is measured in accordance with descriptions in the Examples described below.

As the thermoplastic resin used in the binder resin, polyolefin resins such as polyethylene and polypropylene, polyamide resins, polyester resins such as polyethylene terephthalate and polybutylene terephthalate, polyoxymethylene resins, polyetherketone resins such as polyether ketones, polyether ether ketones, polyether ketone ketones, and polyether ether ketone ketones, polyether sulfone resins, polyether sulfide resins, thermoplastic polyimide resins such as thermoplastic polyether imides, thermoplastic polyamide imides, wholly aromatic polyimides and semiaromatic polyimides, and the like can be used, and a polyamide resin is more preferable.

The polyamide resin for use in the present embodiment may be an aliphatic polyamide resin or an aromatic polyamide resin. Examples of the aliphatic polyamide resin and the aromatic polyamide resin have the same meanings as the matters described in the continuous thermoplastic resin fiber (1) except for the following matters.

The binder resin is preferably a xylylenediamine-based polyamide resin.

The xylylenediamine-based polyamide resin in the present embodiment is a polyamide resin containing a diamine structural unit and a dicarboxylic acid structural unit, in which 70 mol% or more of the diamine structural unit is derived from a xylylenediamine.

Preferably, in the xylylenediamine-based polyamide resin, 50 mol% or more of the dicarboxylic acid structural unit is derived from an α,ω-linear aliphatic dicarboxylic acid having from 4 to 20 carbon atoms. In the composite material of the present embodiment, the strength and chemical resistance inherent in the xylylenediamine-based polyamide resin can be exhibited.

In the binder resin, as to the mole ratio between meta-xylylenediamine and para-xylylenediamine in xylylenediamine when a total of meta-xylylenediamine and para-xylylenediamine is taken as 100 mol, meta-xylylenediamine/para-xylylenediamine is preferably from 0 to 100/from 100 to 0, more preferably from 10 to 100/from 90 to 0. By containing meta-xylylenediamine, the melting point of the polyamide resin can be decreased.

Examples of the α,ω-linear aliphatic dicarboxylic acid having from 4 to 20 carbon atoms that is preferably used as the raw material dicarboxylic acid component of the xylylenediamine-based polyamide resin include an aliphatic dicarboxylic acid, such as succinic acid, glutaric acid, pimelic acid, suberic acid, azelaic acid, adipic acid, sebacic acid, undecanedioic acid, or dodecanedioic acid. One or a mixture of two or more of these may be used. Among these, at least one selected from adipic acid, sebacic acid, and dodecanedioic acid is more preferable, and adipic acid and/or sebacic acid is still more preferable.

Examples of a preferred embodiment of the xylylenediamine-based polyamide resin in the binder resin include a xylylenediamine-based polyamide resin in which 50 mol% or more (preferably 70 mol% or more, more preferably 90 mol% or more) of the dicarboxylic acid structural units are derived from at least one of adipic acid, sebacic acid, and dodecanedioic acid (preferably adipic acid and/or sebacic acid, more preferably adipic acid).

The melting point of the thermoplastic resin (preferably xylylenediamine-based polyamide resin) contained in the binder resin is preferably 120°C or more, more preferably 130°C or more, still more preferably 150°C or more, further preferably 180°C or more. The melting point of the thermoplastic resin (preferably xylylenediamine-based polyamide resin) is preferably 300°C or less, more preferably 250°C or less, still more preferably 220°C or less, further preferably 200°C or less.

To the binder resin for use in the present embodiment, additives such as antioxidants, stabilizers such as thermal stabilizers, hydrolysis-resistant improving agents, weather resistant stabilizers, matting agents, UV absorbers, nucleating agents, plasticizers, dispersants, flame retardants, antistatic agents, anti-coloration agents, anti-gelling agents, colorants, release agents, and the like can be added within the range that does not impair the object and effect of the present invention. For details of these, reference can be made to the descriptions in paragraphs 0130 to 0155 of JP 4894982 B and the descriptions in paragraphs 0047 to 0103 of WO 2021/241471, the contents of which are incorporated herein by reference.

The content of the binder resin in the composite material of the present embodiment is 5 parts by mass or more, preferably 10 parts by mass or more, more preferably 15 parts by mass or more, per 100 parts by mass of the total of the continuous thermoplastic resin fiber (1) and the binder resin. When the content is equal to or more than the lower limit value, the continuous thermoplastic resin fiber (1) can be bound to the continuous reinforcing fiber (2) with the binder interposed therebetween without leakage. The content of the binder resin in the composite material of the present embodiment is 80 parts by mass or less, preferably 70 parts by mass or less, more preferably 60 parts by mass or less, still more preferably 55 parts by mass or less, per 100 parts by mass of the total of the continuous thermoplastic resin fiber (1) and the binder resin. When the content is equal to or less than the upper limit value, flexibility remains in the composite material, and the design tends to be more clearly reflected when a molded article is produced.

The composite material of the present embodiment may contain only one binder resin or two or more binder resins. When two or more continuous thermoplastic resin fibers are contained, the total amount is preferably in the range described above.

In the present embodiment, it is preferable that the resin constituting the continuous thermoplastic resin fiber (1) and the binder resin each independently contain a polyamide resin, and it is preferable that each independently contain a xylylenediamine-based polyamide resin.

### Method for Producing Composite Material

The composite material of the present embodiment can be produced by a known method. For example, a continuous thermoplastic resin fiber (3) that has been opened and the continuous reinforcing fiber (2) (preferably, recycled carbon fiber in which thermosetting resin remains) having a thermosetting resin on a surface thereof can be bound with a binder resin to form a composite material.

The binder resin is preferably heated at the time of binding, and the heating temperature at this time is preferably the melting point of the binder resin -10°C or more, more preferably the melting point of the binder resin -5°C or more, still more preferably the melting point of the binder resin or more, further preferably the melting point of the binder resin +5°C or more, and it is preferable that the heating temperature is the melting point of the thermoplastic resin constituting the thermoplastic resin fibers (1) +5°C or more, more preferably less than the melting point of the thermoplastic resin constituting the thermoplastic resin fibers (1), still more preferably the melting point of the thermoplastic resin constituting the thermoplastic resin fibers (1) -5°C or less, further preferably the melting point of the thermoplastic resin constituting the thermoplastic resin fibers (1) -10°C or less.

By performing heating at such a temperature, the fibrous shape of the continuous thermoplastic resin fiber (1) is easily maintained, the resulting composite material becomes pliable, and the degree of integration with the continuous reinforcing fiber (2) further improves.

### Examples

Hereinafter, the present invention will be described more specifically with reference to Examples. Materials, amounts used, proportions, processing details, processing procedures, and the like described in the following Examples can be appropriately changed as long as they do not depart from the spirit of the present invention. Thus, the scope of the present invention is not limited to the specific examples described below.

When it is difficult to obtain a measuring instrument or the like used in Examples because of discontinuation or the like, another instrument with equivalent performance can be used for the measurements.

### 1. Raw Material

### Continuous Reinforcing Fiber (2)

CF1: Recycled carbon fiber roving, type of curable resin: epoxy resin, proportion of thermosetting resin not carbonized after carbonization but remaining in fiber: 10 mass%
CF2: Recycled carbon fiber roving, type of curable resin: epoxy resin, proportion of thermosetting resin not carbonized after carbonization but remaining in fiber: 30 mass%
CF3: Recycled carbon fiber roving, type of curable resin: acrylate resin, proportion of thermosetting resin not carbonized after carbonization but remaining in fiber: 10 mass%

As the recycled carbon fibers, those carbonized at 500°C for 2 hours were used.

### Thermoplastic Resin

MPXD10: Polyamide resin synthesized in Synthesis Example 1
MXD6: Polyamide resin synthesized from adipic acid and meta-xylylenediamine, available from MITSUBISHI GAS CHEMICAL COMPANY, INC., #6007
MPXD12: Polyamide resin synthesized from meta-xylylenediamine, para-xylylenediamine (MP ratio: 7:3), and dodecanedioic acid
N66: Polyamide 66, available from Toray Industries, Inc., Amilan CM3001
MXD10: Polyamide resin synthesized in Synthesis Example 3
N12: Polyamide 12, available from Ube Industries, Ltd., UBESTA
PET: Polyethylene terephthalate resin, available from Invista, 1101E, intrinsic viscosity: 0.80 dL/g

### Surface Treating Agent

Water-soluble nylon: AQ nylon T70 available from Toray Industries, Inc.
Epoxy: EM-058 available from ADEKA Corporation

### Synthesis Example 1: Synthesis of MPXD10

Sebacic acid (available from CASDA, Casda Biomaterials Co., Ltd.) was placed in a jacketed reactor equipped with an agitator, a partial condenser, a cooler, a thermometer, a dropping funnel, and a nitrogen gas introduction tube, sufficiently purged with nitrogen, heated and melted at 170°C, and then the temperature was raised to 240°C while gradually dropping a mixed amine of meta-xylylenediamine and para-xylylenediamine (70:30) (MPXDA available from MITSUBISHI GAS CHEMICAL COMPANY, INC.) so that the molar ratio with sebacic acid was 1:1 while stirring the content. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, through application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet.

### Synthesis Example 2: Synthesis Example of MPXD12

Dodecanedioic acid in an amount of 13,820 g (60 mol) and sodium acetate/sodium hypophosphite monohydrate (molar ratio =1/1.5) in an amount of 15.43 g were placed in a reaction vessel equipped with an agitator, a partial condenser, a cooler, a thermometer, a dripping device and a nitrogen gas introduction tube, and a strand die. To the obtained material, 8,173 g of a mixed diamine (60 mol, available from MITSUBISHI GAS CHEMICAL COMPANY, INC.) having a ratio between meta-xylylenediamine and para-xylylenediamine of 70:30 was added dropwise under stirring, and the internal temperature was continuously raised to 240°C over 2.5 hours while generated condensed water was removed into the system. After dropwise addition was completed, the internal temperature was increased, and when the temperature reached 250°C, the pressure inside the reaction vessel was reduced. The internal temperature was then further increased, and the melt polycondensation reaction was continued for 20 minutes at 255°C.

Thereafter, the inside of the system was pressurized with nitrogen, the polymer was taken out from the strand die, and pelletized to obtain a polyamide resin MPXD12.

### Synthesis Example 3: Synthesis of MXD10

Sebacic acid (available from CASDA, Casda Biomaterials Co., Ltd.) was placed in a jacketed reactor provided with an agitator, a partial condenser, a cooler, a thermometer, a dropping funnel, and a nitrogen gas introduction tube. The reactor was sufficiently purged with nitrogen, and the sebacic acid was heated and melted at 170°C. Then, while the contents were being stirred and while meta-xylylenediamine (MXDA, available from MITSUBISHI GAS CHEMICAL COMPANY, INC.) was gradually added dropwise to give a molar ratio of the meta-xylylenediamine to the sebacic acid of 1:1, the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, through application of a pressure of 0.2 MPa using a nitrogen gas in the reactor, the polymer was taken out as a strand from a nozzle at a lower part of the polymerization tank and cooled with water, and the strand was then pelletized with a pelletizer to obtain a pellet.

### Method for Measuring Proportion (mass%) of Thermosetting Resin in Continuous Reinforcing Fiber (2)

Ten continuous reinforcing fibers (2) each having a length of 1 meter were cut out from the roving, the mass of the continuous reinforcing fibers (2) was measured, and a value obtained by multiplying the mass by 1000 was defined as fineness (the number of g per 1000 m). The fineness was calculated from the ratio between the fineness and the fineness of a virgin carbon fiber (the number of g per 1000 m).

### Method for Producing Continuous Thermoplastic Resin Fiber (1) and Continuous Thermoplastic Resin Fiber (3) (Binder Resin)

The thermoplastic resin was melt-extruded using a single screw extruder having a 30 mm φ screw, extruded into a strand form from a 48 hole-die, and stretched while being wound with a roll, and a continuous thermoplastic resin fiber bundle wound into a wound body was obtained.

### Method for Measuring Melting Point of Thermoplastic Resin

The melting point (Tm) was measured by differential scanning calorimetry (DSC) in accordance with ISO11357. A differential scanning calorimeter was used, and the resin was placed in a measuring pan of the differential scanning calorimeter, and subjected to a pretreatment of heating to a temperature exceeding the melting point at a temperature increasing rate of 10°C/min under a nitrogen atmosphere and then performing rapid cooling, thereafter the measurement was performed. As the measurement conditions, the temperature was increased to 280°C at a temperature increase rate of 10°C/min, and then maintained at 280°C for 5 minutes, after which the temperature was reduced to 100°C at a temperature decrease rate of -5°C/min, and the measurement was then performed to determine the melting point (Tm).

The differential scanning calorimeter used was "DSC-60" available from Shimadzu Corporation.

### 2. Examples 1, 2, 5 to 9, Comparative Example 1 to 3

### Method for Producing Composite Material

From a wound body of the continuous thermoplastic resin fiber (1) wound with 1 m or more of thermoplastic resin fibers, a wound body of the continuous reinforcing fiber (2) wound with 1 m or more of reinforcing fibers, and the continuous thermoplastic resin fiber (3) wound with 1 m or more of thermoplastic resin fibers, the continuous thermoplastic resin fiber (1), the continuous reinforcing fiber (2), and the continuous thermoplastic resin fiber (3) were drawn out, passed through a plurality of guides, and opened with air blowing. The continuous thermoplastic resin fiber (1), the continuous reinforcing fiber (2), and the continuous thermoplastic resin fiber (3) were combined, while spread, into a single bundle, and air blow was further applied through a plurality of guides to promote homogenization, and heating was performed at a temperature at which only the continuous thermoplastic resin fiber (3) was melted (the melting point of the binder resin constituting the continuous thermoplastic resin fiber (3) + 10°C) to obtain a composite material (hybrid tape, width 9 mm, thickness 0.22 mm).

The obtained composite material was evaluated according to "4. Evaluation" described later.

### Production of Molded Article

The composite material was stitched in the same direction by the TFP method to produce a preform. The produced preform was placed in a mold heated to the melting point of the continuous thermoplastic resin fiber (1) + 30°C, and press-molded using a 100 t press machine. After pressing, water was poured into the mold to cool the mold to 80°C, and then the mold was opened and taken out to obtain a molded article. The temperature of the mold during pressing was the melting point of the continuous thermoplastic resin fiber (1) + 30°C, with the pressure 100 kgf/cm² (9.8 MPa), the pressing time of 10 minutes, and the cooling time of 20 minutes.

The obtained molded article was evaluated according to "4. Evaluation" described later.

### 3. Example 3 and Example 4

From a wound body of the continuous thermoplastic resin fiber (1) wound with 1 m or more of thermoplastic resin fibers, a wound body of the continuous reinforcing fiber (2) wound with 1 m or more of reinforcing fibers, and the continuous thermoplastic resin fiber (3) wound with 1 m or more of thermoplastic resin fibers, the continuous thermoplastic resin fiber (1), the continuous reinforcing fiber (2), and the continuous thermoplastic resin fiber (3) were drawn out, passed through a plurality of guides, and opened with air blowing. The continuous thermoplastic resin fiber (1), the continuous reinforcing fiber (2), and the continuous thermoplastic resin fiber (3) were combined, while spread, into a single bundle, and air blow was further applied through a plurality of guides to promote homogenization, and heating was performed at a temperature at which only the continuous thermoplastic resin fiber (3) was melted (the melting point of the binder resin constituting the continuous thermoplastic resin fiber (3) + 10°C) to obtain a hybrid tape (width 9 mm, thickness 0.22 mm).

The obtained hybrid tape was immersed in an aqueous solution containing a surface treating agent for 10 seconds, and then dried at 40°C for 60 minutes when the surface treating agent was a water-soluble nylon or at 60°C for 45 minutes when the surface treating agent was an epoxy, whereby a composite material was obtained.

The obtained composite material was evaluated according to "4. Evaluation" described later.

### Production of Molded Article

The composite material was stitched in the same direction by the TFP method to produce a preform. The produced preform was placed in a mold heated to the melting point of the continuous thermoplastic resin fiber (1) + 30°C, and press-molded using a 100 t press machine. After pressing, water was poured into the mold to cool the mold to 80°C, and then the mold was opened and taken out to obtain a molded article. The temperature of the mold during pressing was the melting point of the continuous thermoplastic resin fiber (1) + 30°C, with the pressure 100 kgf/cm² (9.8 MPa), the pressing time of 10 minutes, and the cooling time of 20 minutes.

The obtained molded article was evaluated according to "4. Evaluation" described later.

### 4. Evaluation

### Degree of Integration

The degree of integration of the composite material was evaluated as follows.

The composite material was cut to 10 cm, and one end was fixed with a packing tape. Then, the opposite end portion of 1 cm was held by hand and brought close to the end side fixed with the packing tape at a speed of 1 cm/min so that the surface of the composite material was in contact with the end side. The evaluation was made by a majority voting of five experts.
S: When the ends were brought close to each other, both ends were not separated but integrated even when they were brought into contact with each other.
A: When the ends were brought close to each other, both ends were partially separated when they were approached by 8 cm.
B: When the ends were brought close to each other, both ends were partially separated when they were approached by 5 cm.
C: When the ends were brought close to each other, both ends were partially separated when they were approached by 3 cm.

The integrated Examples 1 to 9 and Comparative Examples 1 and 2 were evaluated as follows.

### TFP Workability (Pliability)

The TFP workability (pliability) of the composite material was evaluated as follows.

The composite material was stitched in a spiral pattern with a TFP device (available from TISM Inc., product number: TCWM-T01). The sewing speed was 500 rpm.

The evaluation was made by a majority voting of five experts.
A: Stitching was performed as intended at the time of performing stitching with TFP device.
B: Other than A. Stitching was performed for the most part as intended at the time of performing stitching with TFP device, although a part was deviated from intended trace.

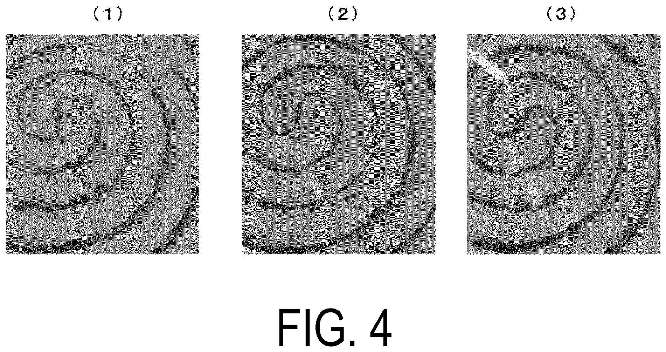

An example of the evaluation A is FIG. 4(1), and examples of the evaluation B are FIGS. 4(2) and 4(3).

### Falling Rate of Fiber from Composite Material

Two bobbins having the same shape and mass were provided, and the obtained composite material was wound around one bobbin and then rewound around the other bobbin. The winding speed was 10 m/min. Evaluation was made as follows.
A: The mass after winding is 98 mass% or more of the mass before winding.
B: The mass after winding is 95 mass% or more and less than 98 mass% of the mass before winding.
C: The mass after winding is less than 95 mass% of the mass before winding.

### Flexural Strength and Flexural Modulus

The molded article obtained as described above was cut into a size suitable for the standard using a slide circular saw available from Makita Corporation, and evaluation was performed in accordance with JIS K7074.

The unit of flexural strength was MPa, and the unit of flexural modulus was MPa.

Measurement was not performed for Comparative Examples 1 to 3 in which molding was not possible by TFP.

**[Table 1]**

| | Example 1 | Example 2 | Example 3 | Example 4 |
|---|---|---|---|---|
| Type of reinforcing fiber (1) | CF1 | CF1 | CF1 | CF1 |
| Proportion of thermosetting resin in reinforcing fiber (mass%) | 33 | 33 | 33 | 33 |
| Type of resin fiber (2) | MPXD10 | MPXD10 | MPXD10 | MPXD10 |
| Melting point of resin constituting resin fiber (°C) | 215 | 215 | 215 | 215 |
| Type of binder resin (3) | MXD10 | MXD10 | MXD10 | MXD10 |
| Melting point of binder resin (°C) | 190 | 190 | 190 | 190 |
| Mass ratio between resin fiber and binder resin | 8:2 | 5:5 | 8:2 | 8:2 |
| Mass ratio between reinforcing fiber and resin fiber | 6:4 | 6:4 | 6:4 | 6:4 |
| Presence and type of surface treating agent | None | None | Water-soluble nylon | Epoxy |
| Amount of surface treating agent relative to reinforcing fiber (mass%) | None | None | 3.5 | 1.7 |
| Degree of integration | B | A | S | S |
| TFP workability (pliability) | A | A | A | A |
| Falling rate of fiber | A | A | A | A |
| Flexural strength | 1498 | 1412 | 1380 | 1366 |
| Flexural modulus | 98 | 95 | 95 | 93 |

**[Table 2]**

| | Example 5 | Example 6 | Example 7 | Example 8 |
|---|---|---|---|---|
| Type of reinforcing fiber (1) | CF1 | CF1 | CF1 | CF1 |
| Proportion of thermosetting resin in reinforcing fiber (mass%) | 33 | 33 | 33 | 33 |
| Type of resin fiber (2) | MXD6 | MXD6 | MPXD12 | N66 |
| Melting point of resin constituting resin fiber (°C) | 237 | 237 | 205 | 265 |
| Type of binder resin (3) | MXD10 | MXD10 | N12 | MPXD10 |
| Melting point of binder resin (°C) | 190 | 190 | 176 | 215 |
| Mass ratio between resin fiber and binder resin | 8:2 | 8:2 | 8:2 | 8:2 |
| Mass ratio between reinforcing fiber and resin fiber | 6:4 | 6:4 | 6:4 | 6:4 |
| Presence and type of surface treating agent | None | None | None | None |
| Amount of surface treating agent relative to reinforcing fiber (mass%) | None | None | None | None |
| Degree of integration | A | A | B | B |
| TFP workability (pliability) | A | A | A | A |
| Falling rate of fiber | A | B | A | A |
| Flexural strength | 1455 | 1480 | 1305 | 1202 |
| Flexural modulus | 96 | 95 | 90 | 84 |

**[Table 3]**

| | Example 9 | Comparative Example 1 | Comparative Example 2 | Comparative Example 3 |
|---|---|---|---|---|
| Type of reinforcing fiber (1) | CF2 | CF1 | CF1 | CF3 |
| Proportion of thermosetting resin in reinforcing fiber (mass%) | 15 | 33 | 33 | 55 |
| Type of resin fiber (2) | MPXD10 | MPXD10 | MXD10 | MPXD10 |
| Melting point of resin constituting resin fiber (°C) | 215 | 190 | 190 | 215 |
| Type of binder resin (3) | MXD10 | MXD10 | PET | MXD10 |
| Melting point of binder resin (°C) | 190 | 190 | 260 | 190 |
| Mass ratio between resin fiber and binder resin | 8:2 | 3:7 | 8:2 | 8:2 |
| Mass ratio between reinforcing fiber and resin fiber | 6:4 | 6:4 | 6:4 | 6:4 |
| Presence and type of surface treating agent | None | None | None | None |
| Amount of surface treating agent relative to reinforcing fiber (mass%) | None | None | None | None |
| Degree of integration | A | A | C | Not fibrous and TFP not possible |
| TFP workability (pliability) | A | B | B | |
| Falling rate of fiber | A | A | C | |
| Flexural strength | 1552 | TFP not possible, measurement failed* | | |
| Flexural modulus | 102 | | | |

As is clear from the above results, the composite material of the present invention was excellent in the degree of integration and also in the TFP workability. Further, the falling rate of fiber was also low. Further, the molded article molded from the composite material of the present invention was also excellent in mechanical strength (Examples 1 to 9).

In contrast, when the melting point of the resin constituting the continuous thermoplastic resin fiber (1) was the same as or lower than the melting point of the binder resin (thermoplastic resin (3)) (Comparative Examples 1 and 2), pliability was insufficient, and TFP could not be performed.

When the amount of the thermosetting resin contained in the continuous reinforcing fiber (2) was large (Comparative Example 3), the continuous reinforcing fiber (2) was not fibrous, and TFP could not be performed.

### Reference Signs List

1 Continuous thermoplastic resin fiber (1)
22 Continuous reinforcing fiber itself
3 Binder resin
4 Thermosetting resin
10 Composite material
11 Yarn

## Claims

1. A composite material, comprising:
a continuous thermoplastic resin fiber (1);
a continuous reinforcing fiber (2) including a thermosetting resin on a surface thereof; and
a thermoplastic resin (3) having a melting point lower than a melting point of a resin constituting the continuous thermoplastic resin fiber (1),
wherein the continuous reinforcing fiber (2) contains the thermosetting resin at a proportion of from 2 to 40 mass%,
a content of the thermoplastic resin (3) contained in the composite material is from 5 to 80 parts by mass per 100 parts by mass of a total of the continuous thermoplastic resin fiber (1) and the thermoplastic resin (3), and
at least a portion of the continuous thermoplastic resin fibers (1) and at least a portion of the continuous reinforcing fibers (2) are bound to each other through the thermoplastic resin (3).

2. The composite material according to claim 1, wherein the continuous reinforcing fiber (2) contains a recycled continuous reinforcing fiber.

3. The composite material according to claim 1 or 2, wherein the continuous reinforcing fiber (2) contains a recycled continuous carbon fiber.

4. The composite material according to any one of claims 1 to 3, wherein the continuous thermoplastic resin fiber (1) and the thermoplastic resin (3) each independently contain a polyamide resin.

5. The composite material according to any one of claims 1 to 4, wherein the resin constituting the continuous thermoplastic resin fiber (1) contains a xylylenediamine-based polyamide resin containing a diamine structural unit and a dicarboxylic acid structural unit, in which 70 mol% or more of the diamine structural unit is derived from a xylylenediamine.

6. The composite material according to any one of claims 1 to 5, wherein the thermoplastic resin (3) contains a xylylenediamine-based polyamide resin containing a diamine structural unit and a dicarboxylic acid structural unit, in which 70 mol% or more of the diamine structural unit is derived from a xylylenediamine.

7. The composite material according to claim 5 or 6, wherein 50 mol% or more of the dicarboxylic acid structural unit in the xylylenediamine-based polyamide resin comprises a structural unit derived from an α,ω-linear aliphatic dicarboxylic acid having from 4 to 20 carbon atoms.

8. The composite material according to any one of claims 1 to 7, comprising: a continuous thermoplastic resin fiber layer in which the continuous thermoplastic resin fiber (1) is unidirectionally aligned in parallel, and
a continuous reinforcing fiber layer in which the continuous reinforcing fiber (2) is unidirectionally aligned in parallel,
wherein the thermoplastic resin (3) binds the continuous thermoplastic resin fiber layer and the continuous reinforcing fiber layer to each other.

9. The composite material according to claim 8, wherein the continuous thermoplastic resin fiber (1) and the continuous reinforcing fiber (2) are each aligned in parallel in a same direction.

10. The composite material according to any one of claims 1 to 9, wherein the continuous reinforcing fiber (2) is contained in an amount of from 40 to 90 parts by mass per 100 parts by mass of a total of the continuous thermoplastic resin fiber (1) and the continuous reinforcing fiber (2).

11. The composite material according to any one of claims 1 to 10, which has a tape-like shape.

12. The composite material according to any one of claims 1 to 11, which is for tailored fiber placement processing.

13. The composite material according to any one of claims 1 to 12, wherein
the continuous reinforcing fiber (2) comprises a recycled carbon fiber,
the continuous thermoplastic resin fiber (1) and the thermoplastic resin (3) each independently contain a xylylenediamine-based polyamide resin containing a diamine structural unit and a dicarboxylic acid structural unit, in which 70 mol% or more of the diamine structural unit is derived from a xylylenediamine,
50 mol% or more of the dicarboxylic acid structural unit in the xylylenediamine-based polyamide resin is derived from an α,ω-linear aliphatic dicarboxylic acid structural unit having from 4 to 20 carbon atoms,
the composite material includes:
a continuous thermoplastic resin fiber layer in which the continuous thermoplastic resin fiber (1) is unidirectionally aligned in parallel,
a continuous reinforcing fiber layer in which the continuous reinforcing fiber (2) is unidirectionally aligned in parallel,
the thermoplastic resin (3) binds the continuous thermoplastic resin fiber layer and the continuous reinforcing fiber layer to each other,
the continuous thermoplastic resin fiber (1) and the continuous reinforcing fiber (2) are each aligned in parallel in a same direction,
the continuous reinforcing fiber (2) is contained in an amount of from 40 to 90 parts by mass per 100 parts by mass of a total of the continuous thermoplastic resin fiber (1) and the continuous reinforcing fiber (2),
the composite material has a tape-like shape, and
the composite material is for tailored fiber placement processing.

14. A molded article, comprising the composite material described in any one of claims 1 to 13.

15. A method for producing a molded article, the method comprising performing tailored fiber placement processing by stitching the composite material described in any one of claims 1 to 13 onto a base material.
